# EUROPÄISCHE PATENTSCHRIFT

(11) **EP 3 529 904 B1**
(45) Veröffentlichungstag und Bekanntmachung des Hinweises auf die Patenterteilung: **09.12.2026**
(21) Anmeldenummer: 17791050.2
(22) Anmeldetag: 24.10.2017
(51) Int. Cl.: H04B 5/77, H04B 5/79, H04B 5/26

(54) **KOMMUNIKATIONSANORDNUNG ZUR DRAHTLOSEN KOMMUNIKATION UND VERFAHREN ZUM STEUERN EINER SOLCHEN KOMMUNIKATIONSANORDNUNG**
COMMUNICATION ARRANGEMENT FOR WIRELESS COMMUNICATION, AND METHOD FOR CONTROLLING SUCH A COMMUNICATION ARRANGEMENT
SYSTÈME DE COMMUNICATION DESTINÉ À LA COMMUNICATION SANS FIL ET PROCÉDÉ DE COMMANDE D'UN TEL SYSTÈME DE COMMUNICATION

(30) Priorität: 24.10.2016 DE 102016220866
(43) Veröffentlichungstag der Anmeldung: 28.08.2019
(73) Patentinhaber: Robert Bosch GmbH, 70442 Stuttgart (DE)
(72) Erfinder: ULLMANN, Stefan, 70825 Korntal-Muenchingen (DE); HOLTZ, Gerald, 70174 Stuttgart (DE); BECKER, Rainer, 73730 Esslingen (DE)
(86) Internationale Anmeldenummer: PCT/EP2017/077174
(87) Internationale Veröffentlichungsnummer: WO 2018/077881

(56) Entgegenhaltungen:
- EP-A1- 3 239 913
- WO-A2-2007/057786
- CN-A- 105 868 983
- CN-U- 204 303 007
- US-A1- 2010 160 005
- US-A1- 2014 197 927
- US-A1- 2016 301 217

## Beschreibung

Die vorliegende Erfindung betrifft eine Kommunikationsanordnung zur drahtlosen Kommunikation sowie ein Verfahren zum Steuern einer solchen Kommunikationsanordnung.

### Stand der Technik

Kommunikationsanordnungen zur drahtlosen Kommunikation sind an sich bekannt. Typischerweise umfassen die Kommunikationsanordnungen eine elektronische Schaltung, wobei die Schaltung eine Kommunikationseinheit zur drahtlosen Kommunikation aufweist. Hierfür ist in der Kommunikationseinheit ein mit einer Antenne verbundenes Antennennetzwerk vorgesehen. Eine mögliche Technologie hierfür ist die Nahfeldkommunikation (Near Field Communication, NFC).

Solche Kommunikationsanordnungen finden in vielfältigen Einsatzbereichen Anwendung. Beispielsweise sind Kommunikationsanordnungen zur drahtlosen Kommunikation auf als Zahlungsmittel einsetzbare Karten wie Kreditkarten oder Bankkarten aufgebracht, um einen Zahlungsvorgang mittels drahtloser Kommunikation auslösen zu können. Hierzu übermittelt die Karte über ihre Kommunikationseinheit typischerweise mittels NFC-Technologie drahtlos notwendige Informationen wie die Kartennummer an die Empfängereinheit, hier an das Bezahlterminal. Die Benutzung einer solchen Karte mit kontaktlosem Bezahlvorgang ist technisch einfach und erfordert kein spezielles Fachwissen, sodass ihr breiter Einsatz in der Gesellschaft ermöglicht wird.

Allerdings besteht bei einer kontaktlosen Daten- und Informationsübermittlung die grundsätzliche Gefahr, dass nicht berechtigte Personen Zugang zu den Daten erlangen. So können nicht berechtigte Personen unbemerkt die sensiblen Daten aus den Kreditkarten entlocken, in dem sie mit einer Empfängereinheit ein Bezahlterminal nachahmen. Die Empfängereinheit kann etwa ein Smartphone mit einem entsprechenden App (Anwendungssoftware; application software) sein, welches die nicht berechtigte Person in die Nähe der fremden Kreditkarte bringt und dort hält. Hat die Karte einmal ihre Daten an das Smartphone übermittelt, kann die nicht berechtigte Person mit den Daten selbst Zahlungen ausführen oder anderen Schaden für den Kreditkartenbesitzer anrichten.

Verschiedene Maßnahmen zur Steigerung der Sicherheit beim kontaktlosen Zahlungsvorgang wurden bereits vorgestellt. So ist beispielsweise aus DE 10 2014 104 303 A1 eine Funkkommunikationseinrichtung bekannt, die eine Transceiver-Schaltung umfasst, die dazu ausgelegt ist, drahtlos mit einer anderen Einrichtung zu kommunizieren. Zusätzlich ist die Transceiver-Schaltung mit einer manipulationssicheren Schaltung verschaltet. Die manipulationssichere Schaltung selbst ist ferner mit einem Prozessor verschaltet, welcher dazu ausgelegt ist, Daten mit der Transceiver-Schaltung über die manipulationssichere Schaltung auszutauschen. Die manipulationssichere Schaltung kann als ein Teilnehmer-Identitätsmodul (Subscriber Identity Module, SIM) oder auch als eine Universal Integrated Circuit Card ausgebildet sein. Jegliche Kommunikation zwischen der Transceiver-Schaltung und dem Prozessor wird über diese manipulationssichere Schaltung geführt, um eine unbefugte Nutzung der Daten zu vermeiden.

In DE 10 2010 043 899 A1 wird weiter eine Kommunikationsvorrichtung vorgestellt, die zur drahtlosen Kommunikation eine drahtlose Kommunikationsschnittstelle aufweist, wobei die drahtlose Kommunikationsschnittstelle ein Antennennetzwerk mit einem Antennenschwingkreis umfasst. Gemäß der Lehre wird zusätzlich eine Deaktivierungseinrichtung vorgeschlagen, die ausgebildet ist, eine elektrische Eigenschaft des Antennennetzwerks zu ändern, um die drahtlose Kommunikationsstelle zu deaktivieren. Dabei kann die zu ändernde elektrische Eigenschaft des Antennennetzwerks eine Induktivität, eine Kapazität, ein Widerstand, eine Impedanz oder eine Reaktanz sein. Durch Betätigen der Deaktivierungseinrichtung wird also im Ergebnis der Antennenschwingkreis verstimmt, um so ein Empfangen oder ein Aussenden von elektromagnetischen Wellen über die Antenne zu stören, wodurch letztlich eine Kommunikation mit der Kommunikationsvorrichtung unterbunden werden kann.

Bei der beschriebenen Lehre wird also durch den Einsatz der Deaktivierungseinrichtung zwingend der Antennenschwingkreis selbst verändert in einer ihrer elektrischen Eigenschaft. Da die elektronische Verstimmung naturgemäß nicht digital erfolgt, sind die Zustände "Kommunikation unterbunden" und "Kommunikation nicht unterbunden" entsprechend ebenfalls nicht klar definiert.

In US 2014/197927 A1 wird eine Kommunikationsanordnung zur drahtlosen Kommunikation vorgestellt. Dabei wird zwischen einem Sperrzustand und einem Freigabezustand unterschieden.

Es besteht daher der Bedarf an einer Kommunikationsanordnung, die zulässig und sicher von einem klar definierten Sperrzustand zu einem ebenso klar definierten Freigabezustand und umgekehrt überführt werden kann.

### Offenbarung der Erfindung

Die erfindungsgemäße Kommunikationsanordnung umfasst eine elektronische Schaltung, die mindestens eine Kommunikationseinheit zur drahtlosen Kommunikation aufweist. Die Kommunikationseinheit umfasst ihrerseits ein mit einer Antenne verbundenes Antennennetzwerk. Ferner weist die Kommunikationsanordnung eine Betätigungseinheit auf. Erfindungsgemäß umfasst die Schaltung neben der Kommunikationseinheit zusätzlich eine Signalverarbeitungseinheit auf. Die Betätigungseinheit ist ausgestaltet, beim Betätigen der Betätigungseinheit ein Signal an die Signalverarbeitungseinheit auszulösen, welche darauf basierend die Kommunikationsanordnung von einem Sperrzustand zu einem Freigabezustand oder umgekehrt überführt. Im Sperrzustand ist das Empfangen von externer Energie verhindert und die Kommunikationsanordnung kann nur im Freigabezustand externe Energie empfangen.

Mit der erfindungsgemäßen Ausgestaltung der Kommunikationsanordnung wird erreicht, dass eine Kommunikationsanordnung bereitgestellt wird, die nicht nur zuverlässig, sondern auch sicher von einem Sperrzustand zu einem Freigabezustand oder umgekehrt überführt werden kann. Unter einem Sperrzustand wird in dieser Schrift ein Zustand verstanden, bei dem die Möglichkeit zur drahtlosen Kommunikation zumindest teilweise deaktiviert ist. Bei einer Überführung von solch einem Sperrzustand zu einem Freigabezustand wird die bisher deaktivierte Möglichkeit zur drahtlosen Kommunikation aktiviert. Ein Sperrzustand kann beispielsweise gebildet werden, indem eine betreffende Einheit insgesamt in einen "Schlafmodus" gesetzt wird. Bei einer Überführung in einen Freigabezustand wird die entsprechende Einheit "geweckt'. Alternativ kann die betreffende Einheit im Sperrmodus komplett "ausgeschalten" sein, die bei ihrer Überführung in den Freigabemodus "eingeschaltet' wird.

Insbesondere sind so die beiden Zustände - Sperrzustand und Freigabezustand für die Kommunikationsanordnung - jeweils klar und eindeutig definiert. Da erfindungsgemäß zwingend eine Betätigungseinheit vorgesehen ist, welche ausgestaltet ist, beim Betätigen derselben zunächst auf jeden Fall ein Signal an eine Signalverarbeitungseinheit auszulösen, welche dann basierend auf dem Signal die Kommunikationsanordnung von einem Sperrzustand zu einem Freigabezustand oder umgekehrt überführt, besteht nicht die Notwendigkeit, das Antennennetzwerk selbst zu beeinflussen, d.h. eine Änderung einer elektrischen Eigenschaft des Antennennetzwerkes auf jeden Fall herbeizuführen. Da die Überführung der Kommunikationsanordnung von einem Sperrzustand zu einem Freigabezustand oder umgekehrt völlig unabhängig von den elektrischen Eigenschaften des Antennennetzwerkes ermöglicht wird, kann eine Änderung einer elektrischen Eigenschaft des Antennennetzwerkes durch das Betätigen der Betätigungseinheit zusätzlich noch erfolgen, muss aber nicht.

Ferner ist die erfindungsgemäße Kommunikationsanordnung als eine Karte, insbesondere eine als Zahlungsmittel einsetzbare Karte wie Kreditkarte oder Bankkarte, oder als ein Identifizierungsdokument wie ein Ausweis ausgebildet oder auf einer Karte oder auf einem Identifizierungsdokument angebracht. Die Erfindung ist in Anspruch 1 beschrieben.

Vorteilhafte Weiterbildungen der Erfindung sind in den Unteransprüchen angegeben und in der Beschreibung beschrieben.

### Zeichnung

Ausführungsbeispiele der Erfindung werden anhand der Zeichnungen und der nachfolgenden Beschreibung näher erläutert. Es zeigen:
Figur 1 ein erstes Ausführungsbeispiel der erfindungsgemäßen Kommunikationsanordnung in schematischer Darstellung, und
Figur 2 ein zweites Ausführungsbeispiel der erfindungsgemäßen Kommunikationsanordnung in schematischer Darstellung.

### Beschreibung der Ausführungsbeispiele

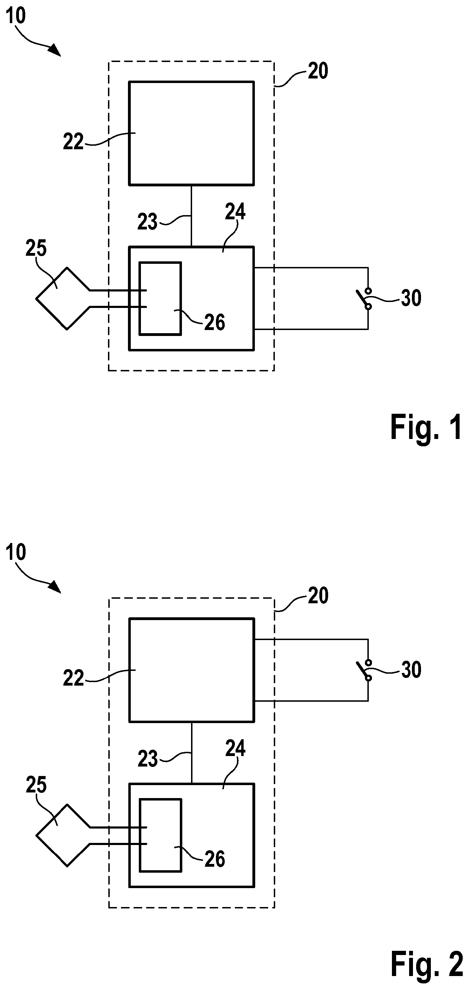

Ein erstes Ausführungsbeispiel der erfindungsgemäßen Kommunikationsanordnung wird mit Hilfe der Figur 1 erläutert. Grundsätzlich wird mit der Erfindung eine Kommunikationsanordnung 10 mit einer elektronischen Schaltung 20 bereitgestellt. Die Schaltung 20 weist mindestens eine Kommunikationseinheit 24 zur drahtlosen Kommunikation auf, wobei die Kommunikationseinheit 24 selbst ein mit einer Antenne 25 verbundenes Antennennetzwerk 26 umfasst. Über die Antenne 25 kann die Kommunikationsanordnung 10 mit einer externen, in der Figur nicht dargestellten Einheit kommunizieren.

Es sei an dieser Stelle darauf hingewiesen, dass in der vorliegenden Schrift unter "kommunizieren" bzw. "Kommunikation" nicht nur die Übermittlung von Daten und/oder Informationen verstanden wird, sondern auch die Übertragung von Energien allgemein, etwa die Übertragung von Energien mittels Kopplung eines magnetischen bzw. elektromagnetischen Wechselfeldes zwischen einer Sende- und einer Empfängereinheit, typischerweise einer Sende- und einer Empfängerspule. So umfasst der Begriff "Kommunikationseinheit 24" bzw. "drahtlose Kommunikation" in der vorliegenden Schrift auch "Energieübertragungseinheit" bzw. "drahtlose Energieübertragung". Dabei kann die Übertragung von Daten oder Energien sowohl nur in einer Richtung als auch in beiden Richtungen erfolgen. Mit andern Worten: Die Kommunikationsanordnung 10 kann in bestimmten Ausführungen grundsätzlich Daten und/oder Energien nur empfangen oder senden. In anderen Ausführungen können die Kommunikationsanordnungen 10 aber auch Daten und/oder Energien sowohl empfangen als auch senden.

Die Kommunikationsanordnung 10 weist ferner eine Betätigungseinheit 30 auf. Weiter umfasst die Schaltung 20 eine Signalverarbeitungseinheit 22. Erfindungsgemäß ist die Betätigungseinheit 30 ausgestaltet, beim Betätigen der Betätigungseinheit 30 ein Signal an die Signalverarbeitungseinheit 22 auszulösen, welche darauf basierend die Kommunikationsanordnung 10 von einem Sperrzustand zu einem Freigabezustand oder umgekehrt überführt. Durch Betätigen der Betätigungseinheit 30 wird also eine Zustandsänderung der Kommunikationsanordnung 10 herbeigeführt. Bevorzugt wird dabei die Kommunikationseinheit 24 der Kommunikationsanordnung 10 von einem Sperrzustand zu einem Freigabezustand oder umgekehrt überführt. Noch bevorzugt wird das Antennennetzwerk 26 der Kommunikationseinheit 24 von einem Sperrzustand zu einem Freigabezustand oder umgekehrt überführt.

Im Übrigen ist in Figur 1 der wesentliche Bereich der Schaltung 20 gestrichelt dargestellt, wobei einzelne Komponententeile - etwa Teilbereich der Antenne 25 oder Teilbereich der Betätigungseinheit 30 - lediglich aus Gründen der zeichnerischen Übersichtlichkeit aus dem gestrichelten Bereich herausragend dargestellt wurden.

Im ersten Ausführungsbeispiel gemäß Figur 1 ist die Kommunikationsanordnung 10 auf einer als Zahlungsmittel einsetzbare Karte wie Kreditkarte oder Bankkarte angebracht. Die Karte enthält schützenwürdige Daten und Informationen wie Karteninhaber und/oder Kontonummer in gespeicherter Form entweder in der Kommunikationsanordnung 10 selbst oder in einem anderen Bereich der Karte. Um mit der Karte einen kontaktlosen Bezahlvorgang ausführen zu können, wird diese in die Nähe eines Bezahlterminals gebracht und gehalten. Das Bezahlterminal strahlt ein elektromagnetisches Feld aus, durch welches die Karte mit der Kommunikationsanordnung 10 mit Energie versorgt wird. Da sich die Karte jedoch vor dem Betätigen der Betätigungseinheit 22 in einem Sperrzustand befindet, kann die Karte bzw. die Kommunikationsanordnung 10 keine Daten freigeben. Erst und nur durch Betätigen der Betätigungseinheit 30 wird ein Signal an die Signalverarbeitungseinheit 22 ausgelöst, welche darauf basierend die Kommunikationsanordnung 10 von einem Sperrzustand zu einem Freigabezustand überführt.

Die Karte übermittelt nun die in der Karte gespeicherten Daten wie die Kontonummer und der Bezahlvorgang wird ausgeführt.

Im ersten Ausführungsbeispiel überführt die Signalverarbeitungseinheit 22 - basierend auf das von der Betätigungseinheit 30 ausgelöstem Signal - konkret die Kommunikationseinheit 24 von einem Sperrzustand zu einem Freigabezustand, wodurch die Kommunikationsanordnung 10 insgesamt die Zustandsänderung erfährt. Vorteilhaft wird hierdurch die Zustandsänderung gezielt bei der Einheit der Kommunikationsanordnung 10 hervorgerufen, die grundsätzlich für die drahtlose Kommunikation zuständig ist. Noch bevorzugt kann die Signalverarbeitungseinheit 22 das Antennennetzwerk 26 der Kommunikationseinheit 24 von einem Sperrzustand zu einem Freigabezustand überführen. Das gesamte Antennennetzwerk 26 selbst wird also von einem deaktivierten Zustand zu einem aktivierten Zustand überführt.

In einer anderen Ausführungsform kann die Karte mit der Kommunikationsanordnung 10 im Sperrzustand selbst das Empfangen von externer Energie, hier ausgestrahlt durch das elektromagnetische Feld des Bezahlterminals, verhindern. Erst durch das Betätigen der Betätigungseinheit 30 wird die Karte bzw. die Kommunikationsanordnung 10 in den Freigabezustand überführt, wodurch die Kommunikationsanordnung 10 die Energie überhaupt empfangen kann und die Karte so mit Energie versorgt wird.

In der Ausführungsform der Erfindung gemäß Figur 1 ist die Betätigungseinheit 30 ausgestaltet, beim Betätigen der Betätigungseinheit 30 ein Signal an die Signalverarbeitungseinheit auszulösen ohne dabei eine elektrische Eigenschaft des Antennennetzwerkes 26 zu ändern. In dieser Ausführungsform wird also auf die Option verzichtet, dass eine elektrische Eigenschaft des Antennennetzwerkes 26 zusätzlich verstimmt wird. Es gibt vorteilhafterweise keinen allmählichen Übergang zwischen den beiden Zuständen im Antennennetzwerk, sodass auch im Antennennetzwerk selbst immer ein stabiler Zustand vorliegt.

Die Karte bzw. die darauf angeordnete Kommunikationsanordnung 10 ist vor dem Betätigen der Betätigungseinheit 30 in einem Sperrzustand. So bleibt jeglicher Datenfluss gesperrt, bis die Betätigungseinheit 30 betätigt wird. Alternativ besteht auch die Möglichkeit, dass die Kommunikationsanordnung 10 im Sperrzustand lediglich im eingeschränkten Umfang Energie- und/oder Datenfluss in beiden Flussrichtungen gesperrt ist. So könnte vorab eine Unterscheidung zwischen sensiblen und weniger sensiblen Daten erfolgen, so dass im Sperrzustand nur die sensiblen Daten gesperrt sind, jedoch nicht die weniger sensiblen Daten. Auch ist es vorstellbar, dass selbst im Freigabezustand nur ein vorbestimmter Satz an Daten für Datenfluss freigegeben ist. Mit anderen Worten: Hochsensible Daten sind und bleiben immer gesperrt, und werden über drahtlose Kommunikation niemals freigegeben. So könnten selbst bei einer Entsperrung hochsensible Daten wie personenbezogene Daten wie der Name des Karteninhabers oder die Prüfziffer (CVC = card validation code) einer Kreditkarte nicht übermittelt werden, sondern lediglich weniger sensible Daten wie die Kreditkartennummer. Die Unterscheidung zwischen sensiblen und weniger sensiblen Daten - und somit zwischen übermittelbarer und immer gesperrter Daten - könnte durch den Anbieter der Kommunikationsanordnung 10, hier im Beispiel durch den Anbieter der Kreditkarte, vorab erfolgen. Alternativ oder zusätzlich könnte auch vorgesehen werden, dass der Anwender der Kommunikationsanordnung 10 die Möglichkeit hat, die Unterscheidung der Daten selbst vorzunehmen. So könnte der Anwender der Kreditkarte selbst entscheiden, welche Informationen - etwa Einkaufssumme, Uhrzeit, Ort, eingekaufte Ware - er preisgeben möchte und welche unter keinen Umständen.

Entsprechend könnte im gesperrten Zustand der Energiefluss nur im eingeschränkten Umfang gesperrt sein, d.h. Energiefluss ist nicht grundsätzlich, sondern ab einer bestimmten Höchstgrenze gesperrt. Bevorzugt ist jedoch die Ausführungsform, bei der jeglicher Energie- und/oder Datenfluss im Sperrzustand gesperrt ist. Übrigens kann die Sperrung je nach Bedarf nur in einer Flussrichtung vorliegen, insbesondere kann die Sperrung nur den von der Kommunikationsanordnung 10 ausgehenden Fluss betreffen.

Korrespondierend ist im Freigabezustand zumindest im eingeschränkten Umfang Energie- und/oder Datenfluss, bevorzugt jeglicher Energie- und/oder Datenfluss, in beiden Flussrichtungen, insbesondere der von der Kommunikationsanordnung 10 ausgehende Fluss, freigegeben.

Ist die Kommunikationsanordnung 10 grundsätzlich geeignet, sowohl Energie als auch Daten zu empfangen bzw. zu übermitteln, kann im Sperrzustand nur der Energiefluss, aber nicht der Datenfluss, gesperrt sein. Je nach Bedarf kann auch umgekehrt im Sperrzustand nur der Datenfluss, aber nicht der Energiefluss gesperrt sein.

Im ersten Ausführungsbeispiel der Kommunikationsanordnung 10 sind die Signalverarbeitungseinheit 22 und die Kommunikationseinheit 24 als getrennte Einheiten 22, 24 ausgestaltet und über eine elektrische Leitung 23 miteinander verbunden. Alternativ können die Signalverarbeitungseinheit 22 und die Kommunikationseinheit 24 als eine gemeinsame, miteinander integrierte Einheit 22, 24 ausgestaltet sein (nicht in Figuren dargestellt).

Wie aus Fig. 1 weiter erkennbar, ist die Betätigungseinheit 30 über die Kommunikationseinheit 24 mit der Signalverarbeitungseinheit 22 elektrisch verbunden. Eine alternative Ausgestaltung zeigt Fig. 2 als zweites Ausführungsbeispiel der Erfindung, wonach die Betätigungseinheit 30 direkt mit der Signalverarbeitungseinheit 22 elektrisch verbunden ist. Das zweite Ausführungsbeispiel unterscheidet sich ansonsten nicht vom ersten Ausführungsbeispiel, so dass auf weitere Beschreibungen des zweiten Ausführungsbeispiels verzichtet wird.

Die Betätigungseinheit 30 ist im ersten Ausführungsbeispiel als eine manuell zu betätigende Betätigungseinheit 30 ausgebildet. So ist vorteilhaft gar kein Werkzeug, weder ein allgemeines noch ein spezielles Werkzeug, zum Betätigen der Betätigungseinheit 30 notwendig. Vielmehr kann die Kommunikations-anordnung 10 bzw. die Bankkarte mit der Kommunikationsanordnung 10 ohne besondere Vorkehrungen eingesetzt werden. Sie ist daher geeignet für einen breiten Einsatz in der Bevölkerung.

In Figur 1 ist die Betätigungseinheit 30 als ein Schalter, insbesondere als ein resistiver Schalter, ausgebildet. Diese Ausführungsform ermöglicht eine aus technischer Sicht zuverlässige, aber auch gleichzeitig gut zu realisierende Möglichkeit einer Betätigungseinheit 30.

Grundsätzlich kann die Betätigungseinheit 30 auf verschiedenen Prinzipien beruhen. So kann die Betätigungseinheit 30 als ein elektrischer Schalter, insbesondere als ein Folientaster, ausgebildet sein. Elektrische Tasten sind meist mechanisch arbeitende Taster, in denen bei Betätigung elektrische Kontakte bewegt werden. Folientaster sind geeignet, um schmutz- und/oder flüssigkeitsabweisende Betätigungseinheiten 30 bereitzustellen.

Eine weitere Möglichkeit besteht darin, eine Betätigungseinheit 30 als einen kapazitiven Taster, insbesondere als einen durch eine Anwesenheit eines Fingers zu betätigenden Taster, auszubilden. Die Anwesenheit eines Fingers wird also kapazitiv detektiert. Eine besonders vorteilhafte Ausführungsform einer solchen Betätigungseinheit 30 ist ein Fingerabdrucksensor. Hierdurch wird erreicht, dass die Betätigungseinheit 30 bzw. die Kommunikationsanordnung 10 letztlich nur durch einen Fingerabdruck einer bestimmten Person aktiviert werden kann. Der durch den Fingerabdrucksensor erfasste Fingerabdruck wird als ein Signal oder mehrere Signale in elektronischer Form der Signalverarbeitungseinheit 22 zugeführt. Die Signalverarbeitungseinheit 22 ist beispielsweise als ein Prozessor ausgebildet. Der Prozessor vergleicht, gegebenenfalls nach einer Weiterverarbeitung der empfangenen Signaldaten, den erfassten Fingerabdruck mit einem oder mehreren bereits in digitaler Form hinterlegten Fingerabdrücken. Je nach Ergebnis des Abgleichs kann die Signalverarbeitungseinheit 22 die Kommunikationsanordnung 20 vom Sperrzustand in den Freigabezustand überführen, d.h. entsperren, oder den Sperrzustand unverändert halten. Andere Begriffe, die ebenfalls im Zusammenhang mit der Fingerabdruck-Technologie benutzt werden, sind Fingerabdruckscanner (eng.: fingerprint scanner) oder auch Touch-ID-Sensor, die auch zu einem neuen Begriff kombiniert werden können, z.B. "Touch-ID fingerprint sensor".

Es sei an dieser Stelle bemerkt, dass die Fingerabdruck-Technologie nicht zwingend mit kapazitiven Sensoren realisiert werden muss. Jede Sensortechnologie, die ein technisches Erfassen des Fingerabdrucks ermöglicht, kann herangezogen werden. So können etwa Betätigungseinheiten 30 mit der Fingerabdruck-Technologie ausgestattet sein, die beispielsweise optische, thermische, E-Feld-, polymere TFT- (Thin Film Transistor), kontaktlose 3D-, Ultraschall- und/oder Infrarot-Sensoren einsetzen. In besonders vorteilhaften Ausführungen können unterschiedliche Sensortypen, also mindestens zwei unterschiedliche Sensortypen, in einer Kommunikationsanordnung 10 realisiert sein. Hierdurch wird die Zuverlässigkeit, Genauigkeit und/oder die Schnelligkeit der Erfassung und Identifizierung eines oder mehrerer Fingerabdrücke erhöht. Die unterschiedlichen Sensortypen können je nach Bedarf einer gemeinsamen Betätigungseinheit 30 oder jeweils voneinander unterschiedlichen Betätigungseinheiten 30 zugeordnet sein. Im letzteren Fall weist die Kommunikationsanordnung 10 mindestens zwei Betätigungseinheiten 30 auf. In einer weiteren Variante umfasst die Kommunikationsanordnung 10 mindestens zwei Betätigungseinheiten 30 auf, die jeweils auf den gleichen Sensortyp basieren.

Weiter kann die Kommunikationsanordnung 10, insbesondere die Betätigungseinheit 10, eine Vorrichtung zur Lebenderkennung (nicht in Figuren dargestellt) umfassen oder mit solch einer Vorrichtung zur Lebenderkennung zumindest funktional verbunden sein. Der Begriff "zumindest funktional" bedeutet in diesem Zusammenhang, dass die Kommunikationsanordnung 10, insbesondere die Betätigungseinheit 30, physisch oder funktional - hier mit der Vorrichtung zur Lebenderkennung - verbunden ist. So könnte die Kommunikationsanordnung 20 z.B. kontaktlos mit der Vorrichtung zur Lebenderkennung kommunizieren. Die Vorrichtung zur Lebenderkennung dient zur Feststellung, ob z.B. der auf der Betätigungseinheit 30 erfasste Fingerabdruck durch eine lebende Person hervorgerufen wurde oder bloß durch eine Kopie eines Fingerabdrucks. So können Vorrichtungen zur Lebenderfassung lebende Merkmale wie Puls, Blutzirkulation, Wärmebild oder 3D-Tiefenscan erfassen. Beispielsweise kann mit einem IR-Sensor festgestellt werden, ob totes Gewebe (absorbiert IR-Licht gut) oder lebendes Gewebe (reflektiert IR-Licht) vorliegt. Mittels eines kapazitiven Sensors kann hingegen die Sauerstoffsättigung bestimmt werden.

Im Übrigen kann die Betätigungseinheit 30 neben der Fingerabdruck-Technologie zusätzlich oder alternativ auch mit anderen biometrischen Authentifizierungstechniken ausgestattet sein. So können als biometrische Authentifizierungstechnik zur Betätigung der Betätigungseinheit 30 beispielsweise die Gesichts-, Iris- oder Handerkennung eingesetzt werden. Ferner ist es auch möglich, als biometrische Merkmale verhaltensbasierte Charakteristika wie Stimme, Handschrift oder auch Anschlagsrhythmus auf die Betätigungseinheit 30 heranzuziehen. In besonderen Ausführungsformen kann die Kommunikationsanordnung 20, insbesondere die Betätigungseinheit 30, mehrere biometrische, etwa gleiche oder auch unterschiedliche, Authentifizierungstechniken aufweisen. Auch kann die Kommunikationsanordnung 20 nicht-biometrische und biometrische Techniken für die Betätigungseinheit 30 umfassen.

Alternativ kann die Betätigungseinheit 30 als eine maschinell, insbesondere automatisch oder halbautomatisch, zu betätigende Betätigungseinheit 30 ausgebildet sein. So kann das Betätigen der Betätigungseinheit 30 ausgelöst werden ohne ein manuelles Betätigen, wenn etwa eine Überprüfung einer oder mehrerer Bedingungen durchgeführt worden ist mit dem Ergebnis, dass die Betätigungseinheit 30 betätigt werden soll. Die Überprüfung könnte etwa sicherheitsrelevante Bedingungen umfassen.

Die Signalverarbeitungseinheit 22 ist geeignet, Signale zu empfangen und diese zu verarbeiten. Dabei können simple Signale, aber je nach Bedarf auch komplexe Signale verarbeitet werden. Im Ausführungsbeispiel nach Fig. 1 ist die Signalverarbeitungseinheit 22 als ein µController ausgebildet. Grundsätzlich können Prozessoren als Signalverarbeitungseinheiten 22 realisiert sein.

Bevorzugt ist die Kommunikationseinheit 10 als ein NFC- (Near field communication, Nahfeldkommunikation) Frontend ausgebildet. Alternativ kann sie als ein FFC- (Far field communication, Fernfeldkommunikation) Frontend realisiert sein. In einer besonders anspruchsvollen Ausführungsform umfasst die Kommunikationseinheit 10 sowohl ein NFC- als auch ein FFC- Frontend. Damit ist die Kommunikationseinheit 10 flexibel einsetzbar.

Weiter ist das Antennennetzwerk 26 der Kommunikationseinheit 24 vorteilhafterweise geeignet zur Kommunikation über eine RFID- (Radio Frequency Identification), UMTS- (Universal Mobile Telecommunications System), WLAN- (Wireless Local Area Network), GSM- (Global System for Mobile Communications) und/oder Bluetooth-Schnittstelle. Dies umfasst die Möglichkeit, dass das Antennennetzwerk 26 eine der genannten Schnittstellen aufweist.

Die beschriebene Kommunikationsanordnung 10 hat auch den Vorteil, dass sie auf vielfältige Weise für unterschiedliche Anwendungsbereiche eingesetzt werden kann. Beispielsweise kann die Kommunikationsanordnung 10 als eine Karte, insbesondere eine als Zahlungsmittel einsetzbare Karte wie Kreditkarte oder Bankkarte, ausgebildet sein oder auf einer Karte angebracht sein. Weiter kann die Karte auch als eine Gesundheitskarte ausgebildet sein. Auch ist es möglich, dass die Kommunikationsanordnung 10 als ein Identifizierungsdokument wie ein Ausweis ausgebildet ist oder auf einem Identifizierungsdokument angebracht ist.

Weitere sinnvolle Einsatzmöglichkeiten sind nicht auf Karten und Ausweise beschränkt. So kann die Kommunikationsanordnung 10 an einem elektronischen Gerät wie Mobilgerät, insbesondere Mobiltelefon, Tablet-Computer oder PDA (Personal Digital Assistance) angebracht sein. Daneben kann die Kommunikationsanordnung 10 auch an einem Elektrowerkzeug wie Bohrer, Haushaltsgerät wie Küchengerät oder Fahrvorrichtung wie Kraftfahrzeug angebracht sein.

Grundsätzlich kann die Kommunikationsanordnung 10 als ein Bestandteil einer Vorrichtung bereits in der Vorrichtung in integrierter Form vorliegen. Ein Beispiel hierzu ist die Kreditkarte, die bereits die Kommunikationsanordnung 10 umfasst, etwa bei ihrer Auslieferung an den Verbraucher. Alternativ ist es möglich, eine ursprüngliche Vorrichtung ohne die Kommunikationsanordnung 10 zu einem späteren Zeitpunkt mit der Kommunikationsanordnung 10 zu ergänzen. Dabei kann die Kommunikationsanordnung 10 auf eine Außenfläche der Vorrichtung aufgebracht, im inneren Bereich der Vorrichtung angeordnet, oder sonst wie mit der Vorrichtung physisch oder zumindest funktionell verbunden werden. Besonders bei bestehenden Maschinen, Anlagen und Geräten oder auch Fahrvorrichtungen, die vernetzt werden sollen, kann die Kommunikationsanordnung 10 als ein Retrofit-Teil nachgerüstet werden.

Vernetzte Maschinen, Anlagen und Geräte erlangen durch das Industrie 4.0-Konzept und loT-Technologie (Internet of Things) immer mehr an Bedeutung, sodass diese Vorrichtungen ebenfalls die Kommunikationsanordnung 10 umfassen sollten:
Die erfindungsgemäße Kommunikationsanordnung 10 kann ferner an einer Maschine angeordnet sein bzw. auch eine Maschine kann die Kommunikationsanordnung 10 umfassen. Besonders vorteilhaft können bei Maschinen, insbesondere bei Robotern, solche Kommunikationsanordnungen 10 zum Einsatz kommen, die mit einer maschinell, insbesondere automatisch oder halbautomatisch, zu betätigenden Betätigungseinheit 30 ausgestattet sind. Beispielhaft werden immer mehr vernetze Maschinen im Zuge der Einführung und Aufbau des Industrie 4.0-Konzeptes ("connected industry", "smart factory") eingesetzt. In der Fertigungsindustrie etwa sind Produktionsanlagen und Lagersysteme zunehmend in der Lage, selbstständig Informationen auszutauschen, Aktionen anzustoßen und einander zu steuern. Machine-to-Machine-Kommunikation (M2M) vernetzen nicht nur Fertigungs- und Lieferprozesse, sondern generieren auch jede Menge Daten. Hierbei haben die Maschinen, die eine maschinell zu betätigende Betätigungseinheit 30 aufweisen, grundsätzlich vorteilhaft die Möglichkeit, je nach vorliegender Situation bestimmte Daten zur Übermittlung an andere Maschinen freizugeben oder eben nicht.

Ist dabei die maschinell zu betätigende Betätigungseinheit 30 eine automatisch zu betätigende Betätigungseinheit 30, so verläuft der Vorgang des Betätigens ohne jedes Eingreifen von Menschen. Vielmehr wird ohne jede Einwirkung von Menschen bestimmt, ob und welche Daten zur Weiterleitung freigegeben werden oder nicht. Hierfür können beispielsweise vorab Kriterien für und gegen Freigabe der Daten abgelegt sein, welche bei konkret vorliegenden Daten maschinell überprüft werden. Kriterien können etwa Sensibilität, Wichtigkeit, Genauigkeit, Notwendigkeit, Größe, Typ, Ursprung, Empfänger und/oder Eilbedarf der zu übermittelnden Daten sein. So trägt dieser Vorgang auch dazu bei, dass die Maschinen nicht mit der großen Menge an Daten, die bei vernetzten Maschinen vorhanden sind und auch generiert werden, unnötigerweise belastet werden. Demgemäß wird vorteilhaft unkontrolliertes und ungebremstes Datenwachstum vermieden.

Ist hingegen die maschinell zu betätigende Betätigungseinheit 30 eine halbautomatisch zu betätigende Betätigungseinheit 30, so wird die Betätigungseinheit 30 unter gemeinsamer Einwirkung von maschinellen und manuellen Vorgängen betätigt. So könnten etwa die zu übermittelnden Daten nach oben genannten Kriterien maschinell überprüft werden, jedoch muss das Ergebnis der Überprüfung manuell noch bestätigt werden, damit die endgültige Freigabe der Daten erfolgt. Auch ist es möglich, dass bestimmte Kriterien wie Datengröße maschinell und andere Kriterien wie Sensibilität manuell überprüft werden.

Die oben beschriebenen technischen Merkmale für Maschinen gelten im Besonderen auch für alle vernetzten Geräte, insbesondere Geräte in Smart Home Systemen. Durch vernetzte Geräte in Smart Home Systemen steigen einerseits beispielsweise Komfort und Energieeffizienz. So kann etwa durch die Nutzung intelligenter Gebäudeautomation der Betrieb von betriebstechnischen Anlagen in einem Gebäude funktionserfüllender, zuverlässiger, sicherer und energieeffizienter gestaltet werden. Andererseits sind als mögliche Risiken von vernetzten Geräten in Smart Home Systemen der Datenschutz und Datensicherheit identifiziert worden. Dabei drohen Gefahren aus beiden Richtungen des Datenflusses: Angriffe von Hackern gegen Smart Home Systeme können unter Umständen schädliche Daten bzw. Befehle in Form von Schadsoftware in ein vernetztes Gerät einschleusen. Es wurde bereits demonstriert, dass unbefugte Personen auf diese Weise z.B. den Strom abdrehen oder Licht in fremden Häusern ausschalten konnten. Gravierende Schäden sind leicht vorstellbar, wenn grundsätzlich ein Manipulieren der vernetzten Geräte von unbefugten Personen möglich wird. Mit der erfindungsgemäßen Kommunikationsanordnung 10 kann die Möglichkeit gegeben werden, bei drohender Einschleusung von schädlichen Daten einen Sperrzustand für eingehende Daten zu halten oder in den Sperrzustand zu überführen.

Aber auch der Datenfluss aus vernetzten Geräten heraus kann eine Gefahr darstellen. Durch die Geräte im Smart Home Systemen werden auch Daten gesammelt. Aus technischer Sicht können diese Daten ohne Probleme an die Anbieter und/oder Hersteller der vernetzten Geräte oder des Smart Home Systems übermittelt werden. Aus diesen Daten könnten u.a. personenbezogene und/oder private Daten abgeleitet werden, oder diese Daten liegen bereits als personenbezogene und/oder private Daten vor. Möglicherweise könnte mittels dieser Daten ein Verhaltensmuster des oder der Anwender der Geräte festgestellt werden, z.B. wann im betreffenden Haushalt typischerweise die Waschmaschine benutzt wird oder wann die Bewohner eines Hauses ihr Haus verlassen und wieder zurückkehren. Geräte und/oder Smart Home Systeme, die mit der erfindungsgemäßen Kommunikationsanordnung 10 ausgestattet sind, bieten nun vorteilhaft die Möglichkeit, durch Betätigen oder Nicht-Betätigen der Betätigungseinheit 30 die Übermittlung der Daten freizugeben oder nicht.

Auch bieten Transport- und Fahrvorrichtungen wie Kraftfahrzeuge oder Zweiräder wie E-Bikes, die mit der erfindungsgemäßen Kommunikationsanordnung 10 ausgestattet sind, Vorteile im Umgang mit den zu übermittelnden Daten. Als beispielshafte Situationen, bei denen ein Verkehrsteilnehmer sich identifizieren muss oder ein Zahlungsvorgang vornehmen möchte, können genannt werden: Der Verkehrsteilnehmer möchte Maut-, Tank- und/oder Parkgebühren zahlen. Ist sein Fahrzeug mit der erfindungsgemäßen Kommunikationsanordnung 10 ausgestattet, kann durch Betätigen der Betätigungseinheit 30 die Übermittlung der Daten zur Identifizierung und/oder Zahlung freigegeben werden. Hierbei kann die Betätigungseinheit 30 je nach Ausführungsform - wie bereits beschrieben - manuell, automatisch oder halbautomatisch betätigt werden. Insbesondere bei autonom oder teilautonom fahrenden Fahrzeugen bietet sich die automatisch oder halbautomatisch zu betätigende Betätigungseinheit 30 an. Die Fahrzeuge können sich also selbst identifizieren lassen und/oder einen Zahlungsvorgang ohne oder geringes Eingreifen des Fahrers, aber gegebenenfalls nach eigener Überprüfung des Fahrzeugs, genehmigen. Weiter ist erfindungsgemäße Kommunikationsanordnung 10 vorteilhaft bei Fahrzeugen, die zumindest teilweise mit einem elektrischen Motor bewegt werden (E-Autos oder Hybrid-Autos). Diese Fahrzeuge bzw. die Traktionsbatterien (Antriebsbatterien) müssen an einer Ladesäule oder Stromtankstelle geladen werden. Hier bietet sich die kontaktlose Kommunikation mit der erfindungsgemäßen Kommunikationsanordnung 10 zwischen dem Fahrzeug und der Empfängereinheit der Ladesäule oder Stromtankstelle an. Noch vorteilhafter ist die Anwendung bei solchen Fahrzeugen, deren Traktionsbatterien kontaktlos geladen werden. Zur kontaktlosen Energieübertragung zwischen dem Ladegerät und den Traktionsbatterien erfolgt auch eine drahtlose Kommunikation zum Austausch oder einseitiger Übermittlung von laderelevanten Daten. Es ist sinnvoll, hierfür die erfindungsgemäße Kommunikationsanordnung 10 einzusetzen. Die erfindungsgemäße Kommunikationsanordnung 10 kann dabei in der Anordnung zur kontaktlosen Energieübertragung integriert sein, und somit eine gemeinsame Einheit bilden, oder als eine separat angeordnete Kommunikationsanordnung 10 am Fahrzeug und/oder Ladegerät vorgesehen sein. Sie ist dann vorteilhafterweise mit der Anordnung zur kontaktlosen Energieübertragung gekoppelt, d.h. zumindest funktionell verbunden.

Im Übrigen können die oben beschriebenen Merkmale bezüglich kontaktlosem Laden von Batterien auch bei allen anderen elektrischen Geräten und Vorrichtungen eingesetzt werden, für die ein kontaktloses Laden von Batterien möglich ist, und sind also nicht auf Transport- und Fahrvorrichtungen beschränkt.

Die Erfindung betrifft ferner ein Verfahren zum Steuern einer erfindungsgemäßen Kommunikationsanordnung 10 mit den Schritten:
a) Bereitstellen der Kommunikationsanordnung 10,
b) Betätigen der Betätigungseinheit 30, und
c) Überführen der Kommunikationsanordnung 10 vom Sperrzustand zum Freigabezustand oder umgekehrt.

Das erfindungsgemäße Verfahren ermöglicht eine einfache und gleichzeitig zuverlässige Anwendung der erfindungsgemäßen Kommunikationsanordnung 10.

## Patentansprüche

1. Kommunikationsanordnung (10) mit einer elektronischen Schaltung (20), wobei die Schaltung (20) mindestens eine Kommunikationseinheit (24) zur drahtlosen Kommunikation aufweist, und wobei die Kommunikationseinheit (24) ein mit einer Antenne (25) verbundenes Antennennetzwerk (26) umfasst, und die Kommunikationsanordnung (10) ferner eine Betätigungseinheit (30) aufweist, wobei die Schaltung (20) ferner eine Signalverarbeitungseinheit (22) aufweist und die Betätigungseinheit (30) ausgestaltet ist, beim Betätigen der Betätigungseinheit (30) ein Signal an die Signalverarbeitungseinheit (22) auszulösen, welche darauf basierend die Kommunikationsanordnung (10), bevorzugt die Kommunikationseinheit (24), noch bevorzugt das Antennennetzwerk (26), von einem Sperrzustand zu einem Freigabezustand oder umgekehrt überführt,
wobei im Sperrzustand das Empfangen von externer, drahtloser Energie verhindert ist und die Kommunikationsanordnung (10) nur im Freigabezustand externe, drahtlose Energie empfangen kann,
**dadurch gekennzeichnet,**
**dass** die Kommunikationsanordnung (10) als eine Karte, insbesondere eine als Zahlungsmittel einsetzbare Karte wie Kreditkarte oder Bankkarte, oder als ein Identifizierungsdokument wie ein Ausweis ausgebildet ist oder auf einer Karte oder auf einem Identifizierungsdokument angebracht ist.

2. Kommunikationsanordnung (10) nach Anspruch 1,
**dadurch gekennzeichnet,**
**dass** die Betätigungseinheit (30) ausgestaltet ist, beim Betätigen der Betätigungseinheit (30) ein Signal an die Signalverarbeitungseinheit (22) auszulösen ohne dabei eine elektrische Eigenschaft des Antennennetzwerkes (26) zu ändern.

3. Kommunikationsanordnung (10) nach Anspruch 1 oder 2,
**dadurch gekennzeichnet,**
**dass** im Sperrzustand zumindest im eingeschränkten Umfang Energie- und/oder Datenfluss, bevorzugt jeglicher Energie- und/oder Datenfluss, in beiden Flussrichtungen, insbesondere der von der Kommunikationsanordnung (10) ausgehende Fluss, gesperrt ist.

4. Kommunikationsanordnung (10) nach einem der Ansprüche 1 bis 3,
**dadurch gekennzeichnet,**
**dass** im Freigabezustand zumindest im eingeschränkten Umfang Energie- und/oder Datenfluss, bevorzugt jeglicher Energie- und/oder Datenfluss, in beiden Flussrichtungen, insbesondere der von der Kommunikationsanordnung (10) ausgehende Fluss, freigegeben ist.

5. Kommunikationsanordnung (10) nach einem der Ansprüche 1 bis 4,
**dadurch gekennzeichnet,**
**dass** im Freigabezustand nur ein vorbestimmter Satz an Daten für Datenfluss freigegeben ist.

6. Kommunikationsanordnung (10) nach einem der Ansprüche 1 bis 5,
**dadurch gekennzeichnet,**
**dass** die Signalverarbeitungseinheit (22) und die Kommunikationseinheit (24) als getrennte Einheiten (22, 24) ausgestaltet sind und über eine elektrische Leitung (23) miteinander verbunden sind.

7. Kommunikationsanordnung (10) nach einem der Ansprüche 1 bis 5,
**dadurch gekennzeichnet,**
**dass** die Signalverarbeitungseinheit (22) und die Kommunikationseinheit (24) als eine gemeinsame, miteinander integrierte Einheit (22, 24) ausgestaltet sind.

8. Kommunikationsanordnung (10) nach einem der Ansprüche 1 bis 7,
**dadurch gekennzeichnet,**
**dass** die Betätigungseinheit (30) über die Kommunikationseinheit (24) mit der Signalverarbeitungseinheit (22) elektrisch verbunden ist.

9. Kommunikationsanordnung (10) nach einem der Ansprüche 1 bis 7,
**dadurch gekennzeichnet,**
**dass** die Betätigungseinheit (30) direkt mit der Signalverarbeitungseinheit (22) elektrisch verbunden ist.

10. Kommunikationsanordnung (10) nach einem der Ansprüche 1 bis 9,
**dadurch gekennzeichnet,**
**dass** die Betätigungseinheit (30) als eine manuell zu betätigende Betätigungseinheit (30) ausgebildet ist.

11. Kommunikationsanordnung (10) nach Anspruch 10,
**dadurch gekennzeichnet,**
**dass** die Betätigungseinheit (30) als ein Schalter, insbesondere als ein resistiver Schalter, ausgebildet ist.

12. Kommunikationsanordnung (10) nach Anspruch 10,
**dadurch gekennzeichnet,**
**dass** die Betätigungseinheit (30) als ein elektrischer Schalter, insbesondere als ein Folientaster, ausgebildet ist.

13. Kommunikationsanordnung (10) nach Anspruch 10,
**dadurch gekennzeichnet,**
**dass** die Betätigungseinheit (30) als ein kapazitiver Taster, insbesondere als ein durch eine Anwesenheit eines Fingers zu betätigender Taster, ausgebildet ist.

14. Kommunikationsanordnung (10) nach Anspruch 10 oder 13,
**dadurch gekennzeichnet,**
**dass** die Betätigungseinheit (30) basierend auf einer Fingerabdruck-Technologie wie beispielsweise Fingerabdrucksensor, Fingerabdruckscanner oder Touch-ID-Sensor ausgebildet ist.

15. Kommunikationsanordnung (10) nach einem der Ansprüche 1 bis 14,
**dadurch gekennzeichnet,**
**dass** die Betätigungseinheit (30) mit einer biometrischen Authentifizierungstechnik wie Gesichts-, Iris-, Hand-, Stimmen-, Handschrifterkennung oder auch Anschlagsrhythmus auf die Betätigungseinheit (30) ausgestattet ist.

16. Kommunikationsanordnung (10) nach Anspruch 15,
**dadurch gekennzeichnet**,
die Kommunikationsanordnung (10) eine Vorrichtung zur Lebenderkennung umfasst oder mit einer Vorrichtung zur Lebenderkennung zumindest funktionell verbunden ist.

17. Kommunikationsanordnung (10) nach einem der Ansprüche 1 bis 16,
**dadurch gekennzeichnet**,
die Kommunikationsanordnung (10) als ein Retrofit- Teil zum Nachrüsten bestehender Vorrichtungen ausgebildet ist.

18. Kommunikationsanordnung (10) nach einem der Ansprüche 1 bis 9 und 17,
**dadurch gekennzeichnet,**
**dass** die Betätigungseinheit (30) als eine maschinell, insbesondere automatisch oder halbautomatisch, zu betätigende Betätigungseinheit (30) ausgebildet ist.

19. Kommunikationsanordnung (10) nach einem der Ansprüche 1 bis 18, **dadurch gekennzeichnet, dass** die Karte schutzwürdige Daten und Informationen wie Karteninhaber und/oder Kontonummer in gespeicherter Form entweder in der Kommunikationsanordnung (10) selbst oder in einem anderen Bereich der Karte enthält.

20. Kommunikationsanordnung (10) nach einem der Ansprüche 1 bis 19,
**dadurch gekennzeichnet,**
**dass** die Signalverarbeitungseinheit (22) als ein µController oder ein Prozessor ausgebildet ist.

21. Kommunikationsanordnung (10) nach einem der Ansprüche 1 bis 20,
**dadurch gekennzeichnet,**
**dass** die Kommunikationseinheit (24) als ein NFC- (Near field communication, Nahfeldkommunikation) Frontend ausgebildet ist.

22. Kommunikationsanordnung (10) nach einem der Ansprüche 1 bis 21,
**dadurch gekennzeichnet,**
**dass** die Kommunikationseinheit (24) als ein FFC- (Far field communication, Fernfeldkommunikation) Frontend ausgebildet ist.

23. Kommunikationsanordnung (10) nach einem der Ansprüche 1 bis 22,
**dadurch gekennzeichnet,**
**dass** das Antennennetzwerk (26) der Kommunikationseinheit (24) geeignet ist zur Kommunikation über eine RFID- (Radio Frequency Identification), UMTS- (Universal Mobile Telecommunications System), WLAN- (Wireless Local Area Network), GSM- (Global System for Mobile Communications) und/oder Bluetooth-Schnittstelle.

24. Kommunikationsanordnung (10) nach einem der Ansprüche 5 bis 23, **dadurch gekennzeichnet, dass** der vorbestimmte Satz an für Datenfluss freigegebene Daten durch den Anbieter der Karte bestimmt ist.

25. Kommunikationsanordnung (10) nach einem der Ansprüche 5 bis 24, **dadurch gekennzeichnet, dass** der vorbestimmte Satz an für Datenfluss freigegebene Daten durch den Anwender der Karte bestimmt ist.

26. Kommunikationsanordnung (10) nach einem der Ansprüche 1 bis 25,
**dadurch gekennzeichnet,**
**dass** die Kommunikationsanordnung (10) in elektrischen Geräten und Vorrichtungen angeordnet ist, für die eine kontaktlose Energieübertragung, insbesondere ein kontaktloses Laden von Batterien, möglich ist.

27. Kommunikationsanordnung (10) nach Anspruch 25,
**dadurch gekennzeichnet,**
**dass** der vorbestimmte Satz an für Datenfluss freigegebene Daten durch den Anwender der Karte Information wie Einkaufssumme, Uhrzeit, Ort oder eingekaufte Ware umfasst.

28. Verfahren zum Steuern einer Kommunikationsanordnung (10) nach einem der Ansprüche 1 bis 27 mit den Schritten:
a) Bereitstellen der Kommunikationsanordnung (10),
b) Betätigen der Betätigungseinheit (30), und
c) Überführen der Kommunikationsanordnung (10) vom Sperrzustand zum Freigabezustand oder umgekehrt.

## Claims

1. Communication arrangement (10) having an electronic circuit (20),
wherein the circuit (20) has at least one communication unit (24) for wireless communication, and wherein the communication unit (24) comprises an antenna network (26) connected to an antenna (25), and the communication arrangement (10) further has an operating unit (30),
wherein the circuit (20) further has a signal processing unit (22) and the operating unit (30) is designed to trigger a signal to the signal processing unit (22) when the operating unit (30) is operated, said signal processing unit transferring the communication arrangement (10), preferably the communication unit (24), also preferably the antenna network (26), on the basis thereof from a disabled state to an enabled state or vice versa,
wherein the reception of external, wireless energy is prevented in the disabled state and the communication arrangement (10) can receive external, wireless energy only in the enabled state,
**characterized**
**in that** the communication arrangement (10) is designed as a card, in particular a card usable as a means of payment, such as a credit card or banking card, or is designed as an identification document such as an ID card or is fitted to a card or to an identification document.

2. Communication arrangement (10) according to Claim 1,
**characterized**
**in that** the operating unit (30) is designed to trigger a signal to the signal processing unit (22) when the operating unit (30) is operated without modifying an electrical characteristic of the antenna network (26).

3. Communication arrangement (10) according to Claim 1 or 2,
**characterized**
**in that** energy flow and/or data flow, preferably any energy flow and/or data flow, in both flow directions, in particular the flow emanating from the communication arrangement (10), is/are disabled, at least to a restricted extent, in the disabled state.

4. Communication arrangement (10) according to one of Claims 1 to 3,
**characterized**
**in that** energy flow and/or data flow, preferably any energy flow and/or data flow, in both flow directions, in particular the flow emanating from the communication arrangement (10), is/are enabled, at least to a restricted extent, in the enabled state.

5. Communication arrangement (10) according to one of Claims 1 to 4,
**characterized**
**in that** only a predefined set of data is enabled for data flow in the enabled state.

6. Communication arrangement (10) according to one of Claims 1 to 5,
**characterized**
**in that** the signal processing unit (22) and the communication unit (24) are designed as separate units (22, 24) and are interconnected via an electrical line (23).

7. Communication arrangement (10) according to one of Claims 1 to 5,
**characterized**
**in that** the signal processing unit (22) and the communication unit (24) are designed as a common, mutually integrated unit (22, 24).

8. Communication arrangement (10) according to one of Claims 1 to 7,
**characterized**
**in that** the operating unit (30) is electrically connected via the communication unit (24) to the signal processing unit (22).

9. Communication arrangement (10) according to one of Claims 1 to 7,
**characterized**
**in that** the operating unit (30) is electrically connected directly to the signal processing unit (22).

10. Communication arrangement (10) according to one of Claims 1 to 9,
**characterized**
**in that** the operating unit (30) is designed as an operating unit (30) which is to be manually operated.

11. Communication arrangement (10) according to Claim 10,
**characterized**
**in that** the operating unit (30) is designed as a switch, in particular as a resistive switch.

12. Communication arrangement (10) according to Claim 10,
**characterized**
**in that** the operating unit (30) is designed as an electrical switch, in particular as a membrane switch.

13. Communication arrangement (10) according to Claim 10,
**characterized**
**in that** the operating unit (30) is designed as a capacitive switch, in particular as a switch to be operated by a presence of a finger.

14. Communication arrangement (10) according to Claim 10 or 13,
**characterized**
**in that** the operating unit (30) is designed on the basis of a fingerprint technology such as, for example, a fingerprint sensor, fingerprint scanner or touch ID sensor.

15. Communication arrangement (10) according to one of Claims 1 to 14,
**characterized**
**in that** the operating unit (30) is equipped with a biometric authentication technique such as face, iris, hand, voice, handwriting recognition or tapping speed on the operating unit (30).

16. Communication arrangement (10) according to Claim 15,
**characterized**
**in that** the communication arrangement (10) comprises a device for live finger detection or is at least functionally connected to a device for live finger detection.

17. Communication arrangement (10) according to one of Claims 1 to 16,
**characterized**
**in that** the communication arrangement (10) is designed as a retrofit part for subsequent addition to existing devices.

18. Communication arrangement (10) according to one of Claims 1 to 9 and 17,
**characterized**
**in that** the operating unit (30) is designed as an operating unit (30) which is to be mechanically, in particular automatically or semi-automatically, operated.

19. Communication arrangement (10) according to one of Claims 1 to 18, **characterized in that** the card contains data and information worthy of protection such as the cardholder and/or account number in stored form either in the communication arrangement (10) itself or in another area of the card.

20. Communication arrangement (10) according to one of Claims 1 to 19,
**characterized**
**in that** the signal processing unit (22) is designed as a microcontroller or a processor.

21. Communication arrangement (10) according to one of Claims 1 to 20,
**characterized**
**in that** the communication unit (24) is designed as an NFC (Near Field Communication) frontend.

22. Communication arrangement (10) according to one of Claims 1 to 21,
**characterized**
**in that** the communication unit (24) is designed as an FFC (Far Field Communication) frontend.

23. Communication arrangement (10) according to one of Claims 1 to 22,
**characterized**
**in that** the antenna network (26) of the communication unit (24) is suitable for communication via an RFID (Radio Frequency Identification), UMTS (Universal Mobile Telecommunications System), WLAN (Wireless Local Area Network), GSM (Global System for Mobile Communications) and/or Bluetooth interface.

24. Communication arrangement (10) according to one of Claims 5 to 23, **characterized in that** the predefined set of data enabled for data flow is determined by the provider of the card.

25. Communication arrangement (10) according to one of Claims 5 to 24, **characterized in that** the predefined set of data enabled for data flow is determined by the user of the card.

26. Communication arrangement (10) according to one of Claims 1 to 25,
**characterized**
**in that** the communication arrangement (10) is disposed in electrical units and devices for which contactless energy transmission, in particular a contactless charging of batteries, is possible.

27. Communication arrangement (10) according to Claim 25,
**characterized**
**in that** the predefined set of data enabled for data flow by the user of the card includes information such as purchase sum, time, place or purchased goods.

28. Method for controlling a communication arrangement (10) according to one of Claims 1 to 27 with the following steps:
a) providing the communication arrangement (10),
b) operating the operating unit (30), and
c) transferring the communication arrangement (10) from the disabled state to the enabled state or vice versa.

## Revendications

1. Ensemble de communication (10) avec un circuit (20) électronique,
le circuit (20) comportant au moins une unité de communication (24) pour la communication sans fil, et l'unité de communication (24) comprenant un réseau d'antennes (26) connecté à une antenne (25), et l'ensemble de communication (10) comportant en outre une unité d'actionnement (30),
le circuit (20) comportant en outre une unité de traitement de signaux (22) et l'unité d'actionnement (30) étant configurée pour déclencher, lorsque l'unité d'actionnement (30) est actionnée, un signal à l'attention de l'unité de traitement de signaux (22), qui, sur la base de celui-ci, fait passer l'ensemble de communication (10), de manière préférée l'unité de communication (24), de manière davantage préférée le réseau d'antennes (26) d'un état bloqué dans un état débloqué ou inversement,
la réception d'énergie sans fil externe étant empêchée dans l'état bloqué et l'ensemble de communication (10) ne pouvant recevoir de l'énergie sans fil externe que dans l'état débloqué,
**caractérisé en ce**
**que** l'ensemble de communication (10) est formé comme une carte, en particulier comme une carte pouvant être utilisée comme moyen de paiement, tel qu'une carte de crédit ou une carte bancaire, ou comme un document d'identification tel qu'une carte d'identité, ou est placé sur une carte ou sur un document d'identification.

2. Ensemble de communication (10) selon la revendication 1,
**caractérisé en ce**
**que** l'unité d'actionnement (30) est configurée pour déclencher un signal à l'attention de l'unité de traitement de signaux (22) lorsque l'unité d'actionnement (30) est actionnée sans modifier ce faisant une propriété électrique du réseau d'antennes (26).

3. Ensemble de communication (10) selon la revendication 1 ou 2,
**caractérisé en ce**
**que**, dans l'état bloqué, un flux d'énergie et/ou de données, de manière préférée tout flux d'énergie et/ou de données, est bloqué dans les deux sens de flux, en particulier le flux partant de l'ensemble de communication (10), au moins dans une mesure limitée.

4. Ensemble de communication (10) selon l'une des revendications 1 à 3,
**caractérisé en ce**
**que**, dans l'état débloqué, le flux d'énergie et/ou de données, de manière préférée tout flux d'énergie et/ou de données, est débloqué dans les deux sens de flux, en particulier le flux partant de l'ensemble de communication (10), au moins dans une mesure limitée.

5. Ensemble de communication (10) selon l'une des revendications 1 à 4,
**caractérisé en ce**
**que**, dans l'état débloqué, seul un ensemble prédéfini de données est débloqué pour le flux de données.

6. Ensemble de communication (10) selon l'une des revendications 1 à 5,
**caractérisé en ce**
**que** l'unité de traitement de signaux (22) et l'unité de communication (24) sont configurées comme des unités séparées (22, 24) et sont connectées l'une à l'autre par une ligne électrique (23).

7. Ensemble de communication (10) selon l'une des revendications 1 à 5,
**caractérisé en ce**
**que** l'unité de traitement de signaux (22) et l'unité de communication (24) sont configurées comme une unité commune (22, 24) intégrée l'une à l'autre.

8. Ensemble de communication (10) selon l'une des revendications 1 à 7,
**caractérisé en ce**
**que** l'unité d'actionnement (30) est connectée électriquement à l'unité de traitement de signaux (22) par l'unité de communication (24).

9. Ensemble de communication (10) selon l'une des revendications 1 à 7,
**caractérisé en ce**
**que** l'unité d'actionnement (30) est connectée électriquement directement à l'unité de traitement de signaux (22).

10. Ensemble de communication (10) selon l'une des revendications 1 à 9,
**caractérisé en ce**
**que** l'unité d'actionnement (30) est formée comme une unité d'actionnement (30) à actionner manuellement.

11. Ensemble de communication (10) selon la revendication 10,
**caractérisé en ce**
**que** l'unité d'actionnement (30) est formée comme un commutateur, en particulier comme un commutateur résistif.

12. Ensemble de communication (10) selon la revendication 10,
**caractérisé en ce**
**que** l'unité d'actionnement (30) est formée comme un commutateur électrique, en particulier comme un bouton à membrane.

13. Ensemble de communication (10) selon la revendication 10,
**caractérisé en ce**
**que** l'unité d'actionnement (30) est formée comme un bouton capacitif, en particulier comme un bouton à actionner par la présence d'un doigt.

14. Ensemble de communication (10) selon la revendication 10 ou 13,
**caractérisé en ce**
**que** l'unité d'actionnement (30) est formée sur la base d'une technologie d'empreintes digitales, comme par exemple un capteur d'empreintes digitales, un lecteur d'empreintes digitales ou un capteur d'identification tactile.

15. Ensemble de communication (10) selon l'une des revendications 1 à 14,
**caractérisé en ce**
**que** l'unité d'actionnement (30) est équipée d'une technique d'authentification biométrique telle qu'une reconnaissance faciale, d'iris, manuelle, vocale, manuscrite ou encore un rythme de frappe sur l'unité d'actionnement (30).

16. Ensemble de communication (10) selon la revendication 15,
**caractérisé en ce**
**que** l'ensemble de communication (10) comprend un dispositif de reconnaissance d'état vivant ou est connecté au moins fonctionnellement à un dispositif de reconnaissance d'état vivant.

17. Ensemble de communication (10) selon l'une des revendications 1 à 16,
**caractérisé en ce**
**que** l'ensemble de communication (10) est formé comme une pièce de post-équipement pour équiper ultérieurement des dispositifs existants.

18. Ensemble de communication (10) selon l'une des revendications 1 à 9 et 17,
**caractérisé en ce**
**que** l'unité d'actionnement (30) est formée comme une unité d'actionnement (30) à actionner par une machine, en particulier automatiquement ou semi-automatiquement.

19. Ensemble de communication (10) selon l'une des revendications 1 à 18, **caractérisé en ce que** la carte contient des données et des informations dignes de protection, telles que le titulaire de la carte et/ou le numéro de compte, sous une forme stockée soit dans l'ensemble de communication (10) lui-même, soit dans une autre zone de la carte.

20. Ensemble de communication (10) selon l'une des revendications 1 à 19,
**caractérisé en ce**
**que** l'unité de traitement de signaux (22) est formée comme un microcontrô-leur ou un processeur.

21. Ensemble de communication (10) selon l'une des revendications 1 à 20,
**caractérisé en ce**
**que** l'unité de communication (24) est formée comme une extrémité avant NFC (communication en champ proche).

22. Ensemble de communication (10) selon l'une des revendications 1 à 21,
**caractérisé en ce**
**que** l'unité de communication (24) est formée comme une extrémité avant FFC (communication en champ lointain).

23. Ensemble de communication (10) selon l'une des revendications 1 à 22,
**caractérisé en ce**
**que** le réseau d'antennes (26) de l'unité de communication (24) est adapté pour la communication par une interface RFID (identification par radiofréquence), UMTS (Universal Mobile Telecommunications System - système universel de télécommunications mobiles), WLAN (Wireless local Area Network - réseau local sans fil), GSM (Global System for Mobile Communications - système mondial de communications mobiles) et/ou Bluetooth.

24. Ensemble de communication (10) selon l'une des revendications 5 à 23, **caractérisé en ce que** l'ensemble prédéfini de données débloquées pour le flux de données est défini par le fournisseur de la carte.

25. Ensemble de communication (10) selon l'une des revendications 5 à 24, **caractérisé en ce que** l'ensemble prédéfini de données débloquées pour le flux de données est défini par l'utilisateur de la carte.

26. Ensemble de communication (10) selon l'une des revendications 1 à 25,
**caractérisé en ce**
**que** l'ensemble de communication (10) est disposé dans des appareils électriques et des dispositifs, pour lesquels un transfert d'énergie sans contact, en particulier une charge sans contact de batteries, est possible.

27. Ensemble de communication (10) selon la revendication 25,
**caractérisé en ce**
**que** l'ensemble prédéfini de données débloquées pour le flux de données par l'utilisateur de la carte comprend des informations telles que la somme d'achat, l'heure, le lieu ou les marchandises achetées.

28. Procédé de commande d'un ensemble de communication (10) selon l'une des revendications 1 à 27, avec les étapes :
a) fourniture de l'ensemble de communication (10),
b) actionnement de l'unité d'actionnement (30), et
c) passage de l'ensemble de communication (10) de l'état bloqué dans l'état débloqué ou inversement.
